Europäisches Patentamt

European Patent Office

Office européen des brevets

(19)

(11) Publication number : **0 468 761 A1**

## (12) EUROPEAN PATENT APPLICATION

(21) Application number : **91306734.4**

(22) Date of filing : **24.07.91**

(51) Int. Cl.⁵ : **B60N 2/00**

(30) Priority : **25.07.90 GB 9016357**

(43) Date of publication of application :
**29.01.92 Bulletin 92/05**

(84) Designated Contracting States :
**DE ES FR GB IT SE**

(71) Applicant : **DUNLOP COX LTD**
**Glaisdale Parkway**
**Nottingham NG8 4GP (GB)**

(72) Inventor : **Babbs, Frederick William**
**102A Cropwell Road**
**Radcliffe on Trent, Nottingham NG12 2JG (GB)**

(74) Representative : **Treves, Barry William et al**
**BTR Group Patent & Trade Mark Service P.O.**
**Box 504**
**Erdington Birmingham B24 9QH (GB)**

(54) **Vehicle seat attachment.**

(57)    An attachment device for a vehicle seat comprises at least one male member (109 ; 209) attached to the vehicle floor (4) and a corresponding female member (105 ; 214) attached to the seat base or vice versa. A spring biased pawl (115 ; 247) is provided on the female member (105 ; 214), which engages the male member, (109 ; 209) thus preventing release.

EP 0 468 761 A1

Jouve, 18, rue Saint-Denis, 75001 PARIS

This invention relates to the attachment of a vehicle seat to the floor of a vehicle.

The base of the vehicle seat is conventionally generally rectangular in plan form, two sides of the vehicle seat base extending generally in the fore and aft (longitudinal) direction of the vehicle when fitted. The base is conventionally attached to the floor by bolts, one at each corner, directly, or indirectly, e.g. by means of an intermediate bracket, to part of the vehicle floor. The attachment must be sufficiently secure to ensure the safety of a person sitting on the seat, especially in the event of vehicle collision.

Often the two longitudinal sides of the base comprise a pair of slides enabling the fore and aft position of the seat to be adjusted and it is the lower member of each slide which is bolted to the vehicle floor, the bolts being located one at the front end and one at the rear end of each lower member, an upper member of the slide being capable of sliding movement with respect to the lower.

In practice the vehicle seat base is assembled as a sub-assembly, and it is then fitted, with or without the seat attached thereto, to the vehicle on a moving assembly line. The fitment operation includes the steps of positioning the seat base accurately in relation to the vehicle floor so that the four bolt holes in the base are securely aligned with corresponding threaded securing holes formed in the vehicle floor (or members attached to or forming part of the floor), inserting a bolt (and a washer if necessary) through each aligned pair of holes and finally tightening them. Whilst this operation is relatively simple and usually takes only a few seconds, it is highly advantageous on a moving assembly line to simplify this process, thus shortening the time and preparation further and it is an object of the present invention to provide a vehicle seat base which may be more simply attached to a vehicle floor.

According to the invention an attachment device comprises a male member having a tip and a retaining shoulder spaced apart from and facing away from said tip, a female member comprising two sides and an aperture into which at least a part of the male member is insertable and a pawl mounted on one of the two sides and capable of engaging said retaining shoulder and the other side of the female member to retain said part of the male member in the aperture.

The pawl preferably comprises two cam surfaces one engageable with the shoulder and the other with a surface on the other side. A window may be formed in the other side and the said other of the two cam surfaces may be engageable with an edge of the window.

The male member may be in the form of a substantially flat tongue which is formed with a window and the retaining shoulder comprises an edge of the window. The male member may be formed with at least one location shoulder facing the tip which is engageable with a ledge to locate the said part of the male member accurately within the aperture. Two location shoulders and two corresponding ledges may be provided, the location shoulders being located generally one at each side of the tip.

Alternatively the male member may comprise a U-shaped shackle member having a cross-limb and two side limbs, and the retaining shoulder is formed on the cross-limb.

The pawl may be biased by means of a spring, the normal position of the pawl being in the path of the male member as it is inserted into the female member, and pushed aside against the action of the spring.

According to another aspect of the invention a vehicle comprises a vehicle floor and a seat retained on the floor by means of at least one attachment member as aforesaid.

The male member may be secured to the floor and the female member to the seat base, or vice versa.

In one preferred construction the vehicle seat has a generally rectangular seat base comprising two female members of the attachment device as aforesaid on two adjacent corners, two seat attachment projections being provided on the remaining corners, each capable of being freely insertable into a respective one of two securing apertures on or adjacent the floor of the vehicle when the seat base is in a non-horizontal position, the arrangement being such that on rotation of the seat base into a horizontal position, the female members engage the male members on the vehicle floor and the projections become wedged into the respective apertures by engagement of a cam surface on each projection with a side of the corresponding aperture.

The two attachment projections form part of an attachment device as described in co-pending GB applications no 9011856.3 or 9109494.6 or EP application no 91304003.6 and are preferably formed one at each front end of the lower members of the two seat slides, one at each side of the vehicle seat base, and the female members are formed one at each rear end of the said lower members.

Two embodiments of the invention will now be described by way of example only with reference to the accompanying drawings of which:-

Figure 1 shows a perspective view of part of the body of a vehicle (a car) incorporating part of the attachment device of the first embodiment;

Figure 2 shows a cross-sectional view of an inboard seat slide attached to the side of the raised vehicle floor tunnel shown in Figure 1;

Figure 3 shows a longitudinal sectional view of part of the inboard seat slide shown in Figure 2;

Figure 4 shows a cross-sectional view of an outboard seat slide attached to the floor of the vehicle shown in Figure 1;

Figure 5 shows a perspective view of a projection at the front of the seat slide shown in Figures 2 and 3;

Figure 6 shows a perspective view of part of the body of a vehicle (a car) incorporating part of the attachment device of the second embodiment;

Figure 7 shows a cross-sectional view of an inboard seat slide attached to the side of a raised vehicle floor tunnel by the attachment device of the second embodiment; and

Figure 8 shows a longitudinal sectional view of the device shown in Figure 7.

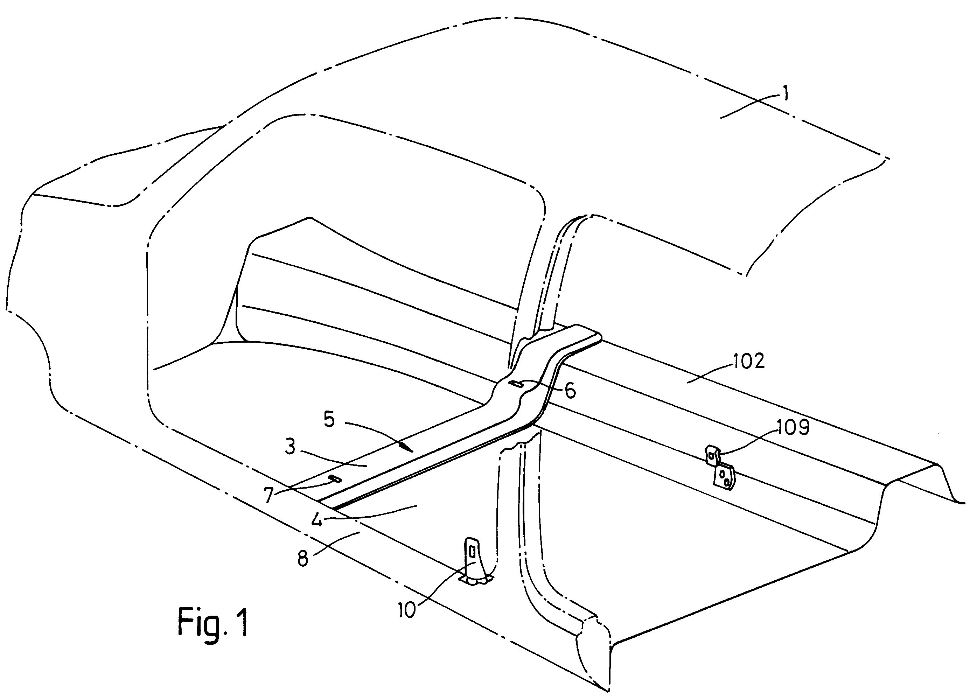

As shown in Figure 1 a car body has a centrally disposed tunnel 102, (often for locating the drive shaft in a rear wheel drive car) extending in the fore and aft direction. A body stiffening hollow beam 3 of rectangular cross-section extends across the vehicle floor 4 in a transverse direction, i.e. generally perpendicular to the tunnel 102. The upper surface 5 of the beam 3 is provided with two spaced apart rectangular slots 6, 7 one slot 6 being adjacent the tunnel 102 and the other 7 being adjacent the vehicle door sill 8. As shown in Figure 1 these slots 6, 7 provide securing points for the two front ends of the two slides forming the fore and aft sides of the front left-hand vehicle seat.

Behind the slots 6, 7 are two upstanding metal tongues 109, 10, one tongue 109 being mounted by suitable bolts 103 on the side of the tunnel and the other tongue 10 on the floor 4 adjacent the door sill 8. The planes of the tongues are generally in the fore and aft direction of the vehicle. These tongues 109, 10 form parts of attachment devices in accordance with the first embodiment of the present invention for securing the two rear ends of the two slides forming the fore and aft sides of the front left hand vehicle seat.

Similar slots and tongues may be provided on the other side of the vehicle, for the front right hand vehicle seat, and, towards the rear of the floor, for the rear seat(s). The slots and tongues may not necessarily be positioned as shown. They may be directly on the vehicle floor, and/or on brackets or other members mounted on the floor, tunnel, or sill.

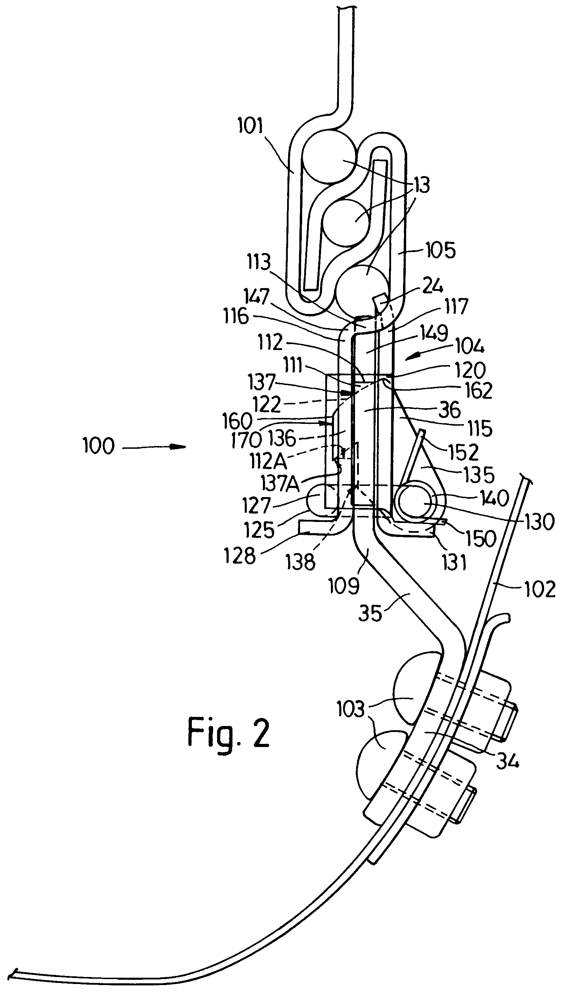

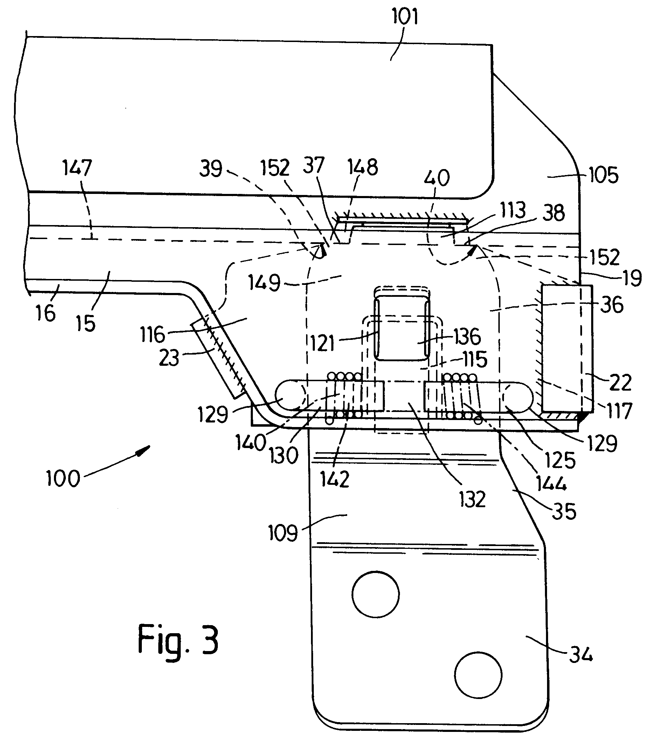

The rear attachment device for the rear end of the inboard seat slide 100 is shown in Figures 2 and 3. The slide 100 comprises an upper member 101 which is movable on ball bearings 13 in a fore and aft direction with respect to a lower member 105. The type of slide mechanism is not relevant to the present invention and will not be described in detail here. Other types of slide mechanism, different from that illustrated, may be utilised.

As can be seen in Figure 3, the lower part of the lower member is in the form of an elongated web 15 and the lower edges bent sideways to form a horizontal flange 16. At the rear end of the lower member, the web is enlarged so that its downwards extent is increased, the rear end 128 of the flange extending all the way along the enlarged part 116 of the web to the rear extremity 19 of the lower member. The enlarged part 116 forms one side of a narrow box 104 enclosing an aperture for receiving the upper portion of the tongue 109 and forming the female member of the attachment device according to the present invention. At the top of the web is a horizontal shelf 147 forming the lower surface of a ball race, and welded to the lower side of the shelf 147 and extending downwardly parallel to the enlarged part and spaced apart therefrom is a plate 117. This plate is approximately the same size as the enlarged part 116 of the web of the lower member and is welded to the enlarged part by means of two attachment flanges 22, 23 and to the shelf by a third attachment flange 24. The plate 117 forms the other side of the box enclosing said aperture and having an open lower side for receiving the tongue, forming the female member of the attachment device of the present invention.

As can be seen particularly in Figure 3 an elongated slot 148 is formed in the shelf 147 adjacent to but spaced apart from the rear end of the lower member. This slot 148 at the upper side of the box receives the upper tip 113 of the inboard tongue 109 as will be described below.

The tongue 109 has a wide base 34 which is bolted to the side of the tunnel 102, an intermediate tapered portion 35 and an upper, vertically extending portion 36. A narrow tip 113 is formed at the top of the upper portion 36 of the tongue 109 and, two locating shoulders 37, 38 are provided one at the rear and one at the front of the tip 113, facing upwards.

The tongue 109 is formed with a rectangular window 111, the upper side 112 of which, closest to the tip 113 of the tongue 109, provides a retaining shoulder for a single pawl 115 mounted on the inboard side of the device as will be described.

The narrow box 104 is formed by the enlarged part 116 of the web of the lower slide member 105 and the plate 117 welded thereto in spaced a-part relationship. Both the enlarged part 116 and the plate 117 are formed with rectangular windows, the window 120 in the plate 117 being larger than the window 111 in the tongue 109, which in turn is larger than the window 122 in the enlarged part 116.

Secured adjacent to the lower edges of the box 104 is a generally rectangular clip 125 formed from a circular cross-section rod. One longer side 127 of the clip extends horizontally along the outboard face of the enlarged part 116 just above the flange 128 on its lower edge, the two shorter sides 129 pass horizontally through holes in the enlarged part 116 and the plate 117, and the other, longer side 130 extends horizontally along the outer, inboard face of the plate 177 just above the flange 131 on its lower edge. The said other longer side 130 is formed with a gap 132 at its centre, and the pawl 115 is mounted to pivot about the two ends of the clip 125, one on each side of the gap 132, the sides of the pawl being formed with recesses (not shown) for receiving the two ends and allowing the pivotal movement. The pawl 115 extends generally upwardly and comprises a main body 135 and at its upper end a tooth 136, having cam surfaces 137, 137a on its upper and lower sides respectively. The tooth 136 projects from the main body 135 towards the enlarged part 116, and beneath the tooth, the main body 135 is formed with a hump surface 138.

The pawl 115 is biased by means of a spring 140 located on the side 130 of the clip 125 adjacent the plate 117, that is, on the inboard side of the device, the spring having two coils 142, 144, one on one side of the gap 132 and the other on the opposite side. The centre length 150 of the wire forming the spring 140 lies generally on top of the flange 131 on the lower edge of the plate 117 and the ends 152 of the wire are bent and act against the inboard side of the main body 135 of the pawl 115, thus urging it towards the windows.

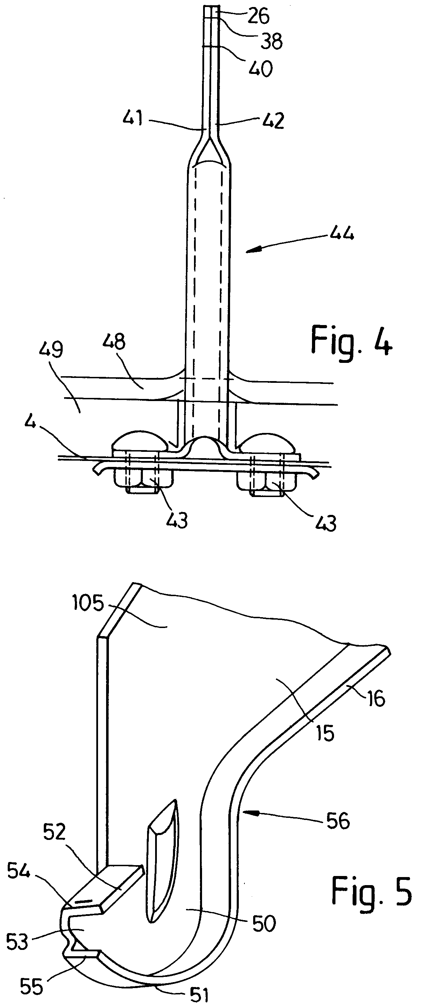

The rear end of the outboard slide is very similar to the rear end of the inboard slide. However the width of the aperture between the enlarged end part 116 of the web 15 of the lower member 105 of the slide and the plate 117 welded thereto is doubled, since the upstanding tongue 10 shown in Figure 4 comprises two sheets 41, 42 of metal instead of one. The base of the tongue 10 is secured by means of bolts 43 to the floor 4 of the vehicle and in the lower part 44 of the tongue 10 the two sheets 41, 42 are slightly spaced apart and the rear edges 46 bent inwards to form a smoothly curved upright rear surface 47 to the tongue 10. This prevents the shoes of persons sitting behind the seat, the carpet 48 and/or underlay 49 from being cut by the possibly sharp edges of a tongue made from a single sheet of metal or from two sheets of metal without a curved rear surface. The two tongues 109 and 10 as described act as locators for the carpet 48 and sound insulating underlay 49 and the need for plastic or metal finishers is obviated.

As shown in Figure 5 the front ends of the web 15 of the lower members 105 are each formed with a semi-circular downwardly and forwardly extending projection 50. Seat slides having such projections are fully described in co-pending GB applications no 9011856.3 or 9109494.6 or EP application no 91304003.6. Briefly, the web 15 of the lower member 105 is formed to have the projection 50 as shown and the flange 16 on the lower edge extends around the lower edge 51 of the projection. The upper forwardly extending edge of the projection is also formed with a flange 52 and a nose portion 53 is formed at the junction between the upper edge 54 and the lower edge 55.

To fit a seat base as described to a vehicle it is placed generally above its final position and tilted, front down, so that the two projections 50 are inserted into the slots 6, 7 formed in the beam 3. The seat base is then tilted backwards into a horizontal position, the upper portions of the tongues 109 and 10 entering the apertures formed in the box 104. The front surface 54 of each projection 50 wedges against the underside of the upper surface 5 of the beam 3 and the front edge of an aperture 6 or 7 and the rear surface 56 of the semi-circular lower edge 51 wedges against the rear edge of the aperture 6 or 7 and at the same time the tips 26 of the two metal tongues 109 and 10 engage in the slots 148 at the top of each box 104 between the enlarged parts 116 of the lower slide members 105 and the plates 117 so as to be maintained there by the pawl 115 acting on each tongue 109 and 10. Thus the seat or seat base is positioned quickly and accurately and is securely held in position so that if the vehicle is involved in a collision or other accident situation causing the floor 4 to twist or distort, each tongue 109 or 10 is stabilised by the tip being firmly located in the slot 148 in the shelf 147 in the lower member 105 and by the pawl 115 acting on the pivot clip 125. Thus a three point trap is provided in the box 104 formed by the enlarged part 116 of the web of the lower member and the plate 117 for each tongue 109 or 10.

When the male and female parts of the attachment device are in process of being fitted together the tip 113 of the tongue 109 first enters the lower, open side of the narrow box 104 and engages against the humped surface 138 of the pawl 115, thus causing it to pivot about the side 130 of the clip 125 adjacent the plate 117, on the inboard side of the seat slide 101, against the biasing force of the spring 125. As the slide 101, and thus the box 104, moves downwards further, the tip 113 of the tongue 109 passes the outboard side of the tooth 136, which has been pushed aside, and enters the slot 148 in the shelf 147 at the top of the box 104. At this position the window 111 in the tunnel 109 is immediately adjacent the tooth 136 so that the pawl 115 is then allowed to pivot under the biasing action of the spring 140 into the position shown in Figure 2. The upper surface 137 of the pawl does not engage the upper side of the window 120 in the plate 117 because this window 120 is larger than that of the tongue 109.

When the upper portion 149 of the tongue 109 is located within the narrow box 104 and the tongue tip 103 is located in the slot 148 formed in the shelf 147 of the lower member of the slide with the locating shoulders 152 of the tongue 109 engaging the two ledges on the underside of the shelf 147 the pawl 115 is urged by means of the spring 140 to the position shown in Figure 2, the main body 135 of the pawl 115 being located within the windows 120, 121, in the plate 117 and the tongue 109 respectively and the tooth 136 being located within the smaller window 122 in the enlarged part 116. The window 122 in the enlarged part 116 is smaller than the window 111 in the tongue 109 and receives only the tooth 136 but not the main body 135 of the pawl 115, the lower edge 112a of the smaller window 122 in the enlarged part 116 being engaged by the cam surface 137a on the underside of the tooth and acting as a stop for the pawl 115.

The upper, cam surface 137 of the tooth is convexly curved as shown in Figure 2, the radius of the leading edge 160 of the upper surface 137 with respect to the pawl pivot axis being smaller than the radius of the trailing edge 162 of the upper surface 137. Thus when the pawl 115 is in the position as shown on Figure 2, the upper cam surface 137 engages the upper side 112 of the window 111 in the tongue 109, and the lower cam surface 137a engages the lower edge 112a of the smaller window 122 thus retaining the tongue 109 in position with a double wedging action.

Normally there is no need to remove the seat once fitted but if there is such a requirement, removal means, in the form of a generally downward extension to the pawl, may be provided, such extension projecting below the lower slide member. To release the seat slide the extension is manually pushed towards the tongue, thus rotating the pawl slightly and away from the surfaces 112 and 112a, thus allowing the rear of the seat slides to be lifted. When the seat base is in an upright position the projections 50 may be removed from the apertures 6 and 7 in the cross-beam 3.

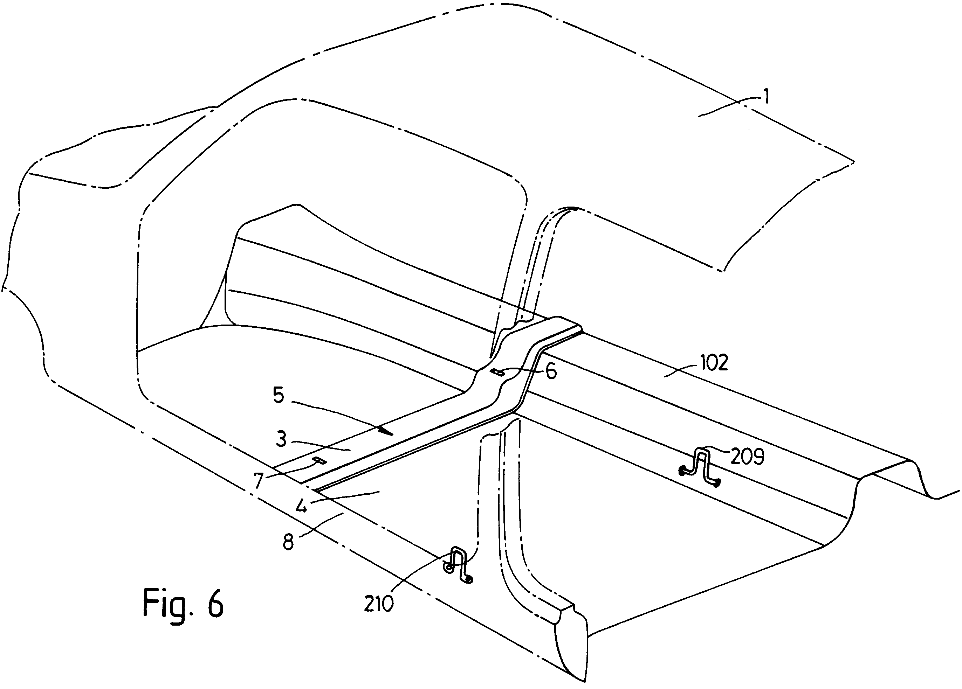

The second embodiment of the invention is shown in Figures 6, 7 and 8. As shown in Figure 6 a car body has a centrally disposed tunnel 102. (often for locating the drive shaft in a rear wheel drive car) extending in the fore and aft direction. A body stiffening hollow beam 3 of rectangular cross-section extends across the vehicle floor 4 in a transverse direction, i.e. generally perpendicular to the tunnel 102. The upper surface 5 of the beam 3 is provided with two spaced apart rectangular slots 6, 7 one slot 6 being adjacent the tunnel 102 and the other 7 being adjacent the vehicle door sill 8. As shown on Figure 6 these slots 6, 7 provide securing points for the two front ends of the two slides forming the fore and aft sides of the front left-hand vehicle seat.

Behind the slots 6, 7 are two upstanding metal, inverted 'U'-shaped shackles 209, 210, one shackle 209 being mounted by suitable bolts 243 on the side of the tunnel and the other shackle 210 on the floor 4 adjacent the door sill 8. The planes of the shackles are generally in the fore and aft direction of the vehicle. These shackles 209, 210 form parts of atachment devices in accordance with the second embodiment of the present invention for securing the two rear ends of the two slides forming the fore and aft sides of the front left-hand vehicle seat.

Similar slots and shackles may be provided on the other side of the vehicle, for the front right hand vehicle seat, and, towards the rear of the floor, for the rear seat(s). The slots and shackles may not necessarily be positioned as shown. They may be directly on the vehicle floor, and/or on brackets or other members mounted on the floor, tunnel, or sill.

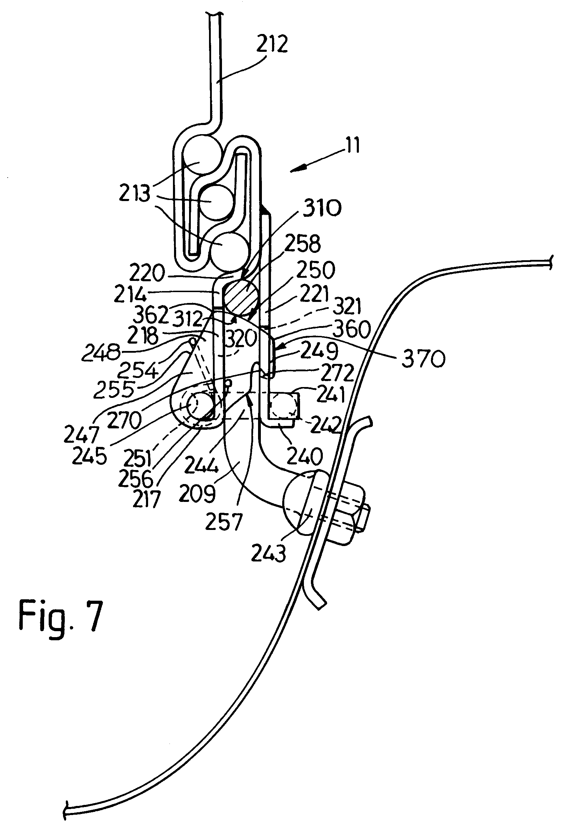

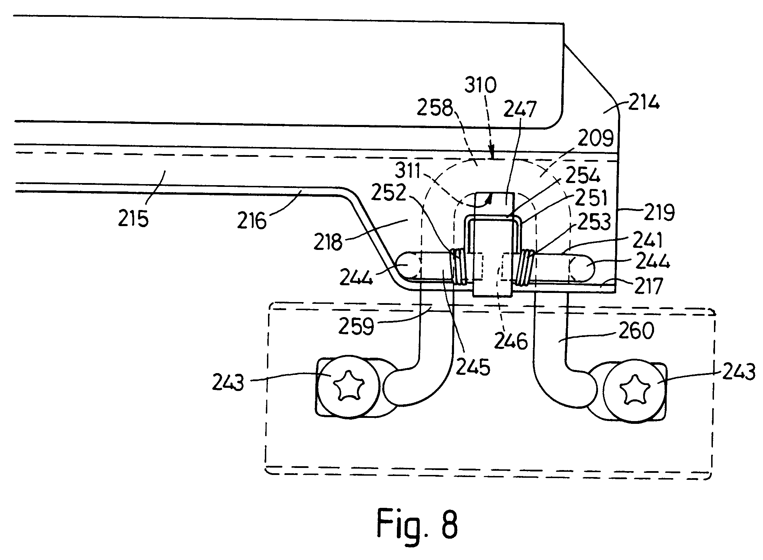

The rear attachment device for the rear end of the inboard seat slide 211 is shown in Figures 7 and 8. The slide 211 comprises an upper member 212 which is movable on ball bearings 213 located in three ball races in a fore and aft direction with respect to a lower member 214. The type of slide mechanism is not relevant to the present invention and will not be described in detail here. Other types of slide mechanism, different from that illustrated, may be utilised.

As can be seen in Figure 8, the lower part of the lower member is in the form of an elongated web 215 and the lower edges bent sideways to form a horizontal flange 216. At the rear end of the lower member, the web is enlarged so that its downwards extent is increased, the rear end 217 of the flange extending all the way along the enlarged part 218 of the web to the rear extremity 219 of the lower member. The enlarged part forms one side of a narrow space for receiving the upper portion of the shackle and forming the female member of the attachment device according to the present invention. At the top of the web is a horizontal shelf 220 forming the lower surface of the lowest of the three ball races (see Figure 2). Welded alongside the shelf 220 and lowest ball race so as to extend downwardly parallel to the enlarged part and spaced apart therefrom is a plate 221. This plate is approximately the same size as the enlarged part 218 of the web of the lower member and has a horizontal flange 240, formed by bending the lower edge of the plate sideways, extending in the same plane as the flange 216 but in the opposite direction (see Figure 2). The plate forms the other side of the space with an open lower side, forming the female member of the attachment device of the present invention. Both the enlarged part 218 and the plate 221 are formed with rectangular windows, the window 321 in the plate 221 being smaller than the window 320 in the enlarged part 218.

Secured on the upper surfaces of the flanges 217 and 240 is a generally rectangular clip 241 formed from a circular cross-section rod. One longer side 242 of the clip extends horizontally along the outer face of the plate 221 above the flange 240 on its lower edge, the two shorter sides 244 pass horizontally through holes in the enlarged part 218 and the plate 221, and the other, longer side 245 extends horizontally along the outer face of the enlarged part 218 just above the flange 217 on its lower edge. The said, other, longer side 245 is formed with a gap 246 at its centre, and a pawl 247 is mounted to pivot about the two ends of the clip 241, one on each side of the gap 246, the sides of the pawl being formed with recesses (not shown) for receiving the two ends and allowing pivotal movement. The pawl 247 extends generally upwardly and comprises a main body 248 and at its upper end a tooth 249, having a cam surface 250 on its upper side. The tooth 249 projects from the main body 248 towards the plate 221. The underside of the tooth is formed with another cam surface 270. Beneath the tooth, the main body 248 is formed with a hump surface 257.

The pawl 247 is biased by means of a spring 251 located on the side 245 of the clip 241 adjacent the enlarged part 218, that is, on the inboard side of the device, the spring having two coils 252, 253, one on one side of the gap 246 and the other on the opposite side. The centre length 254 of the wire forming the spring 251 lies against the side 255 of the pawl 247 and the ends 256 (only one shown) of the wire are bent and act against the inner side of the enlarged part 218, thus urging the pawl 247 towards the windows.

In use of the attachment device, when the upper part of the shackle is located within the narrow space the tip of the shackle i.e. the upper surface 310 of the cross-limb 258 of the shackle is located against the underside of the shelf 220 of the lower member of the slide. The upper parts of the side limbs 259, 260 of the shackle loosely locate against the inner surfaces of the enlarged part 218 and the plate 221. The pawl 247 is urged by means of the spring 251 to the position shown in Figure 7, the main body 248 of the pawl 247 being located within the window 320 in the enlarged part 218 and in the aperture formed beneath cross limb 258 and side limbs 259, 260 of the shackle and the tooth 249 being located within the window 321 in the plate 221. The window 321 in the plate 221 receives only the tooth 249 and not the main body 248 of the pawl 247, the lower edge 272 of the window 321 in the plate 218 being engaged by the cam surface 270 on the underside of the tooth and acting as a stop for the pawl 247.

The upper cam surface 250 of the tooth is convexly curved as shown in Figure 7, the radius of the leading edge 360 of the upper surface 250 with respect to the pawl pivot axis being smaller than the radius of the trailing edge 362 of the upper surface 250. Thus when the pawl 247 is in the position as shown in Figure 7, the upper cam surface 250 engages the under side 312 of the cross-limb 258 of the shackle 209, and the lower cam surface 270 engages the lower edge 272 of the window 321, thus retaining the shackle 209 in position with a double wedging action.

When the male and female parts of the attachment device are in process of being fitted together the cross-limb 258 of the shackle 209 first enters the lower, open side of the narrow space between the plate 291 and enlarged part 218 and engages against the humped surface 257 of the pawl 247, thus causing it to pivot about the side 245 of the clip 241 adjacent the enlarged part 218, on the inboard side of the seat slide, against the biasing force of the spring 251. As the slide, and thus the space, moves downwards further, the cross-limb 258 of the shackle 209 passes the outboard side of the tooth 249, which has been pushed aside, and engages the under side of the shelf 220 at the top of the space. At this position the aperture in the shackle 209 is immediately adjacent the tooth 249 so that the pawl 247 is then allowed to pivot under the biasing action of the spring 251 into the position shown in Figure 7. The upper surface 250 of the pawl does not engage the upper side of the window 320 in the enlarged part 218.

The above description of the second embodiment of the invention relates specifically to an attachment device at the rear end of an inboard seat slide. A similar attachment device with a similar pawl entering through windows in the slide and the aperture in the shackle may be used on the outboard seat slide. Both seat slides may have projections at their front ends similar to those described with respect to the first embodiment and illustrated particularly in Figure 5, and the fitment of a seat having two such seat slides is simlar to that as described in relation to the first embodiment.

Although the seat slides are described as having projections at their front ends and the female parts of the attachment devices at their rear ends, the seat may be secured by four attachment devices in accordance with the invention comprising upright tongues on the vehicle floor and corresponding receiving boxes one at each corner of the vehicle seat base i.e. at the front and rear ends of the two seat slides.

It is preferable to colour the leading face (reference 170 in Figure 2 and 370 in Figure 7) of the pawl of each embodiment brightly e.g. by painting it with red paint. This enables an inspector to ensure that the pawl is properly held in position as shown and the male member of each embodiment correctly located in the female member. If the leading face cannot be seen, being hidden by the seat slide, it means that the pawl has not pivotted to the position shown on the drawings.

**Claims**

1. An attachment device characterised by comprising a male member (109; 209) having a tip (113; 310) and a retaining shoulder (112; 312)) spaced apart from and facing away from said tip (113;310), a female member (105; 214) comprising two sides (116, 117; 218, 221) and an aperture into which at least a part of the male member (109; 209) is insertable, and a pawl (115; 247) mounted on one of the two sides (117; 218) and capable of engaging said retaining shoulder (112; 312) and the other side (116; 221) of the female member to retain said part of the male member (109; 209) in the aperture.

2. An attachment device according to Claim 1 characterised in that the pawl (115; 247) comprises two cam surfaces (137, 137A; 250, 270) one (137; 250) engageable with the retaining shoulder (112; 312) and the other (137A; 270) with a surface on the other side (116; 221).

3. An attachment device according to Claim 2 characterised in that the said other side (116; 221) is formed with a window (122; 321) and the said other (137A; 270) of the two cam surfaces is engageable with an edge (112A; 272) of the window (122; 321).

4. An attachment device according to any one of the preceding claims characterised in that the male member (109) comprises a substantially flat tongue (149).

5. An attachment device according to Claim 4 characterised in that the tongue (149) is formed with a window (111) and the retaining shoulder (112) comprises an edge of the window (111).

6. An attachment device according to Claim 4 or Claim 5 characterised in that the male member (109) is formed with at least one location shoulder (37 or 38) facing the tip (113) which is engageable with a ledge (39 or 40) to locate the said part of the male member (109) accurately within the aperture.

7. An attachment device according to Claim 6 characterised by comprising two location shoulders (37 and 38) and two corresponding ledges (39 and 40), the location shoulders (37 and 38) being located generally one at each side of the tip (113).

8. An attachment device according to any one of Claims 1 to 3 characterised in that the male member (209) comprises a U-shaped shackle member.

9. An attachment device according to Claim 8 characterised in that the U-shaped shackle member (209) comprises a cross-limb (258) and two side limbs (259, 260), and the retaining shoulder (312) is formed on the cross-limb (258).

10. An attachment device according to any one of the preceding claims characterised in that the pawl (115; 247) is biased by a spring (140; 251), the normal position of the pawl (115; 247) being in the path of the male member (109; 209) as it is inserted into the female member (105; 214), and pushed aside against the action of the spring (140; 251).

11. A vehicle comprising a vehicle floor (4) and a seat characterised by being retained on the floor by means of at least one attachment device (100; 11) according to any one of the preceding claims.

12. A vehicle according to Claim 11 characterised in that the male member (109; 209) of the attachment device (100; 11) is secured to the vehicle floor (4) and the female member (105; 214) of the attachment device is secured to the seat base.

13. A vehicle according to either Claim 11 or Claim 12 characterised in that the vehicle seat has a generally rectangular seat base comprising two female members (105; 214) of the attachment device on two adjacent corners, two seat attachment projections (50) being provided in the remaining corners, each projection (50) being capable of being freely insertable into a respective one of two securing apertures (6, 7) on or adjacent the floor (4) of the vehicle when the seat is in a non-horizontal position, the arrangement being such that on rotation of the seat base into a horizontal position, the female members (105; 214) engage two male members (10, 109; 210, 209) on the vehicle floor (4) and the projections (50) become wedged into the respective apertures (6, 7) by engagement of a cam surface (56) on each projection with a side of the corresponding aperture (6, 7).

14. A vehicle according to Claim 13, characterised in that the two attachment projections (50) are formed one at each front end of the lower members (105) of the two seat slides, one at each side of the vehicle seat base, and the female members are formed one at each rear end of the lower members (105).

Fig. 1

Fig. 2

Fig. 3

Fig. 4

Fig. 5

Fig. 6

EP 0 468 761 A1

Fig. 7

Fig. 8

EP 0 468 761 A1

<table>
<tr><td colspan="2">European Patent Office</td><td>EUROPEAN SEARCH REPORT</td><td>Application Number</td></tr>
</table>

EP    91 30 6734

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 916 778 (TATSUYA) <br> * column 3, line 9 - column 6, line 19; figures 1-6 * | 1,8-11 | B60N2/00 |
| Y | | 13 | |
| X | US-A-4 742 984 (COTE) <br> * column 2, line 25 - column 4, line 8; figures 1-9 * | 1,2,11 | |
| X | US-A-4 583 782 (MIKUNIYA) <br> * column 1, line 25 - column 4, line 3; figures 1-5 * | 1,11,12 | |
| A | | 4 | |
| Y | DE-A-2 448 139 (VOLKSWAGENWERK AG) <br> * claims; figure * | 13 | |
| A | | 1,11 | |

TECHNICAL FIELDS SEARCHED (Int. Cl.5 )

B60N

The present search report has been drawn up for all claims

| Place of search | Date of completion of the search | Examiner |
|---|---|---|
| THE HAGUE | 11 NOVEMBER 1991 | GATTI Carlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

15